(19) Europäisches Patentamt
European Patent Office
Office européen des brevets

(11) **EP 1 706 307 B1**

(12) **FASCICULE DE BREVET EUROPEEN**

(45) Date de publication et mention
de la délivrance du brevet:
**30.06.2010 Bulletin 2010/26**

(21) Numéro de dépôt: **04816562.5**

(22) Date de dépôt: **16.12.2004**

(51) Int Cl.:
**B62D 7/15** (2006.01)

(86) Numéro de dépôt international:
**PCT/FR2004/050709**

(87) Numéro de publication internationale:
**WO 2005/061306 (07.07.2005 Gazette 2005/27)**

(54) **PROCEDE ET SYSTEME DE COMMANDE DU BRAQUAGE DE ROUE ARRIERE DIRECTRICE ET VEHICULE CORRESPONDANT**

VERFAHREN UND VORRICHTUNG ZUR HINTERRADLENKWINKELSTEUERUNG UND ENTSPRECHENDES FAHRZEUG

REAR WHEEL STEERING ANGLE CONTROL SYSTEM AND METHOD AND CORRESPONDING VEHICLE

(84) Etats contractants désignés:
**AT BE BG CH CY CZ DE DK EE ES FI FR GB GR HU IE IS IT LI LT LU MC NL PL PT RO SE SI SK TR**

(30) Priorité: **18.12.2003 FR 0314930**

(43) Date de publication de la demande:
**04.10.2006 Bulletin 2006/40**

(73) Titulaire: **RENAULT S.A.S.**
**92100 Boulogne Billancourt (FR)**

(72) Inventeurs:
• **GUEGAN, Stéphane**
**F-75002 PARIS (FR)**
• **POTHIN, Richard**
**F-92420 VAUCRESSON (FR)**

(56) Documents cités:
**EP-A- 0 663 333    EP-A- 0 721 877**
**WO-A-02/14137    DE-A- 3 906 741**
**DE-A- 4 330 055    US-A- 5 606 502**
**US-A- 5 754 966**

# EP 1 706 307 B1

**Description**

La présente invention relève du domaine des systèmes de commande de véhicules terrestres, en particulier de véhicules automobiles à roues.

De façon classique, les véhicules automobiles sont pourvus d'un châssis, d'un habitacle, de roues reliées au châssis par un mécanisme de suspension avec des roues avant directrices commandées par un volant à la disposition du conducteur dans l'habitacle du véhicule.

Le document FR-A-2 681 303 décrit un dispositif de commande de direction arrière pour véhicule automobile à quatre roues directrices, comprenant une plaque formant came et deux galets disposés dans un même plan médian vertical contenant l'axe longitudinal d'une barre de direction arrière commandant le pivotement des roues arrière.

Ce document décrit également que pour obtenir le meilleur comportement routier possible du véhicule, il est nécessaire de braquer les roues arrière dans le même sens que les roues avant pour une valeur d'angle de braquage du volant inférieure à une valeur de seuil prédéterminée dans le sens opposé aux roues avant lorsque la valeur d'angle de braquage dépasse la valeur de seuil. On obtiendrait ainsi un effet « survireur » souhaitable du véhicule lorsque l'angle de braquage est relativement important, par exemple lorsqu'on gare le véhicule dans un garage ou un parc de stationnement, et un effet « sous-vireur » également souhaitable lorsque l'angle de braquage est relativement petit comme c'est le cas lorsque le véhicule roule relativement rapidement.

Le document WO 02/14137 décrit un procédé de commande de lacet et de la dynamique transversale d'un véhicule équipé de quatre roues directrices commandées électriquement au moyen de boucles de commande mutuellement découpées pour commander respectivement l'angle de braquage avant et l'angle de braquage arrière. Ce document comprend un module de calcul d'angle de braquage sans prise en compte de perturbations extérieures, ce qui engendre l'obtention d'un calcul approximatif de l'angle de braquage.

Toutefois, de tels dispositif, relativement fruste, ne permettent pas d'agir finement sur le comportement du véhicule.

L'invention vise à remédier à ces inconvénients et propose un procédé et un système de commande évolués, permettant d'améliorer le comportement du véhicule et par conséquent la sécurité du conducteur et le confort de conduite.

Le procédé de commande du braquage de roue arrière directrice, selon un aspect de l'invention, est destiné à un véhicule à au moins trois roues directrices.

Tel qu'il est revendiqué, le procédé comporte une étape dans laquelle on élabore une consigne actuelle de braquage de roue arrière en fonction de l'angle de braquage de roue avant, de données de déplacement du véhicule et d'une consigne de braquage de roue arrière.

Selon l'invention, on estime au moyen d'un observateur d'état, les perturbations subies par le véhicule à partir de grandeurs mesurées et, en fonction de situations identifiées, on active ou on désactive sélectivement de façon manuelle ou automatique, différents modules.

Ces modules comprennent un module de rejet de perturbation asymptotique, un module de réaction positive et un module de commande.

Le module de rejet de perturbation asymptotique effectue un bouclage sur une perturbation estimée reçue en entrée, et émet en sortie, un signal dont la valeur est l'inverse du produit de la perturbation estimée par un opérateur, de façon à rendre la perturbation inobservable par rapport à la sortie lorsque ledit module est activé.

Le module de réaction positive est capable, lorsqu'il est activé, d'élaborer, à partir d'un modèle de véhicule à deux roues, une consigne d'angle de braquage de roue arrière à partir d'une valeur de commande corrigée de la dynamique de la réponse transitoire et d'une valeur de commande statique.

Le module de commande reçoit en entrée l'information d'activation ou de désactivation des modules de rejet de perturbation et de réaction positive. Ce module de commande élabore une consigne d'angle de braquage de roue arrière permettant d'agir sur la dynamique de la réponse transitoire et sur la réponse statique du véhicule.

La consigne actuelle d'angle de braquage de roue arrière est calculée à partir des valeurs de sortie des différents modules précités.

Le fait de tenir compte de la consigne antérieure de braquage de roue arrière permet un fonctionnement robuste et fiable. Les données de déplacement du véhicule peuvent comprendre la vitesse du véhicule de façon que la consigne actuelle de braquage de roue arrière soit établie en fonction de la vitesse du véhicule.

Dans un mode de réalisation de l'invention, on estime des données d'état du véhicule à partir des données d'entrée. Les données d'état estimées peuvent comprendre la vitesse de lacet $\dot{\psi}$, l'angle de dérive $\beta$, et l'angle de braquage de roue arrière $\alpha$. Les données estimées peuvent être toute variable dont la mesure est impossible, difficile ou onéreuse.

L'invention propose également un système de commande du braquage de roue arrière directrice pour un véhicule à au moins trois roues directrices.

Tel qu'il est revendiqué, le système de commande comprend des moyens pour élaborer une consigne actuelle de braquage de roue arrière en fonction de l'angle de braquage de roue avant, de données de déplacement du véhicule et d'une consigne de braquage de roue arrière.

Selon l'invention, le système comprend un module de rejet de perturbation asymptotique, un module de réaction positive, un module de commande et un moyen d'activation et de désactivation sélective des modules précités.

Le module de rejet de perturbation asymptotique est capable d'effectuer un bouclage sur une perturbation estimée obtenue au moyen d'un observateur d'état et reçue en entrée. Ce module de rejet est capable d'émettre en sortie un signal dont la valeur est l'inverse du produit de la perturbation estimée par un opérateur, de façon à rendre la perturbation inobservable par rapport à la sortie lorsque ledit module est activé.

Le module de réaction positive est capable, lorsqu'il est activé, d'élaborer, à partir d'un modèle de véhicule à deux roues, une consigne d'angle de braquage de roue arrière à partir d'une valeur de commande corrigée de la dynamique de la réponse transitoire et d'une valeur de commande statique.

Le module de commande reçoit en entrée l'information d'activation ou de désactivation des modules de rejet de perturbation et de réaction positive. Ce module de commande élabore une consigne d'angle de braquage de roue arrière permettant d'agir sur la dynamique de la réponse transitoire et sur la réponse statique du véhicule.

Le système comprend également un moyen d'activation et de désactivation sélective des modules précités.

L'observateur d'état est apte à estimer les états du véhicule et les perturbations subies par le véhicule.

Dans un mode de réalisation de l'invention, le module de commande est du type par placement de pôles. Le module de commande par placement de pôles peut être activé et désactivé par le moyen d'activation et de désactivation sélective des modules.

Avantageusement, le module de réaction positive est rebouclé.

Dans un mode de réalisation de l'invention, le module de réaction positive est du type à inversion de modèle.

De préférence, le module de réaction positive comprend un élément de calcul de la vitesse de lacet et de la dérive au centre de gravité du véhicule, à partir d'un modèle de véhicule, et un élément de calcul d'une commande permettant de typer les réponses dynamique et statique du véhicule.

Dans un mode de réalisation de l'invention, le moyen d'activation et de désactivation sélective est à commande manuelle.

Dans un mode de réalisation de l'invention, le moyen d'activation et de désactivation sélective est à commande automatique.

L'invention propose également un véhicule comprenant un châssis, au moins trois roues directrices reliées élastiquement au châssis, et un système de commande de braquage de roue arrière directrice tel qu'il est revendiqué ci-dessus.

L'invention permet à un véhicule d'adopter le comportement le plus stable possible, quel que soit la sollicitation du conducteur ou l'état de la chaussée. Il est ainsi possible de tenir compte de certaines situations susceptibles d'engendrer une perte de contrôle du véhicule, par exemple un évitement d'obstacle simple ou double. L'invention permet de réduire les risques de perte de contrôle dans ce type de cas, qui peuvent être dus à une réponse du véhicule inadaptée car trop vive, pas assez amortie ou encore peu prévisible.

Par ailleurs, l'invention permet un accroissement de la sensation de sécurité, du confort et du plaisir de conduite. Ceci est dû notamment à la possibilité de rejeter les perturbations paramétriques comme les variations de masse, ou les variations des rigidités de dérive des pneus. En outre, le système de commande de roue directrice arrière est susceptible d'agir de façon continue, par exemple dès la mise en mouvement du véhicule, ou lors d'événements comme le déclenchement d'un système d'anti-blocage des roues ou d'un système d'anti-patinage.

Le système de commande de roue directrices arrière sur véhicule à trois roues directrices permet de minimiser, en tenant compte de la vitesse du véhicule, la réponse latérale du véhicule à un coup de volant du conducteur. Le système de commande permet, en effet, de régler la partie statique et la partie transitoire de la réponse latérale du véhicule et son amortissement, ainsi que de régler la réponse du véhicule de façon indépendante desdites parties statique et transitoire. L'optimisation est faite suivant des critères de sécurité, de confort et d'agrément de conduite.

Dans un mode de réalisation de l'invention, on élabore une consigne actuelle de braquage de roue arrière avec des paramètres de réglage neutres sur le comportement du véhicule lorsque lesdits paramètres de réglage sont égaux à un. On facilite ainsi un fonctionnement en mode dégradé en prévoyant des paramètres de réglage unitaires par défaut.

L'invention s'applique à des véhicules à quatre roues, deux avant et deux arrière, à trois roues, ou encore à des véhicules à six roues ou plus, dont au moins quatre directrices.

La présente invention sera mieux comprise à l'étude de la description détaillée de quelques modes de réalisation pris à titre d'exemples nullement limitatifs et illustrés par les dessins annexés, parmi lesquels :

- la figure 1 est une vue schématique d'un véhicule équipé d'un système de commande selon un aspect de l'invention;
- la figure 2 est un schéma logique du système selon un aspect de l'invention;
- la figure 3 est un schéma logique du système selon un autre aspect de l'invention; et
- la figure 4 est un schéma logique du système selon un autre aspect de l'invention.

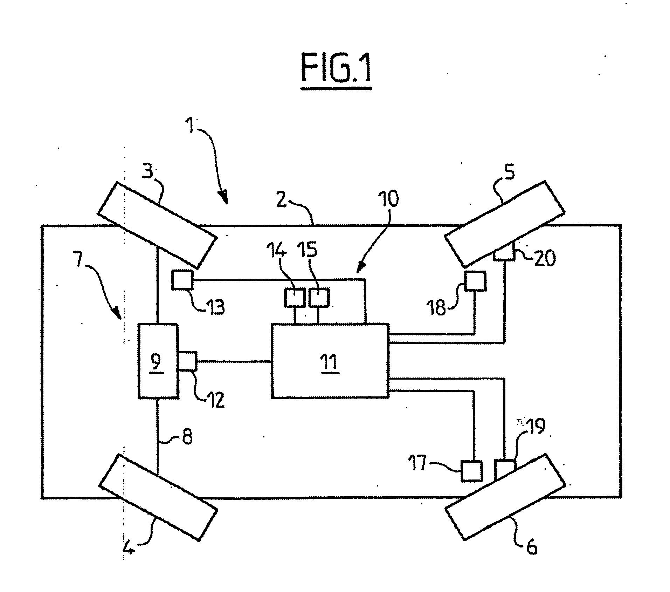

Comme on peut le voir sur la figure 1, le véhicule 1 comprend un châssis 2, deux roues avant directrices 3 et 4 et deux roues arrière directrices 5 et 6, les roues étant reliées au châssis 2 par un mécanisme de suspension non représenté.

Le véhicule 1 se complète par un système de direction 7 comprenant une crémaillère 8 disposée entre les roues avant 3 et 4, un actionneur de crémaillère 9 apte à orienter les roues avant 3 et 4 par l'intermédiaire de la crémaillère 8 en fonction d'ordres reçus, de façon mécanique ou électrique, en provenance d'un volant de direction non représenté, à disposition d'un conducteur du véhicule.

Le système de commande d'aide au braquage 10 comprend une unité de commande 11, un capteur 12 de la position de braquage des roues avant 3 et 4, par exemple positionné sur l'actionneur 9, un capteur 13 de la vitesse de rotation des roues avant permettant de déterminer la vitesse V du véhicule, un capteur 14 de la vitesse de lacet $\dot{\psi}$ du véhicule, c'est-à-dire de la vitesse de rotation du véhicule autour de son centre de gravité suivant un axe vertical, et un capteur 15 de l'accélération latérale au centre de gravité du véhicule.

En outre, le système 10 comprend des capteurs 17 et 18 de l'angle de braquage des roues arrière 5 et 6, et des actionneurs 19 et 20 permettant d'orienter lesdites roues arrière 5 et 6. Toutefois, un seul capteur 17 et un seul actionneur 19 peuvent suffire à la détection de l'angle de braquage et à l'orientation des roues arrière 5 et 6. Les capteurs de position et de vitesse peuvent être de type optique ou encore magnétique, par exemple à effet Hall, coopérant avec un codeur solidaire d'une partie mobile tandis que le capteur est non tournant.

L'unité de commande 11 peut être réalisée sous la forme d'un microprocesseur équipé d'une mémoire vive, d'une mémoire morte, d'une unité centrale et d'interfaces d'entrée/sortie permettant de recevoir des informations des capteurs et d'envoyer des instructions, notamment aux actionneurs 19 et 20.

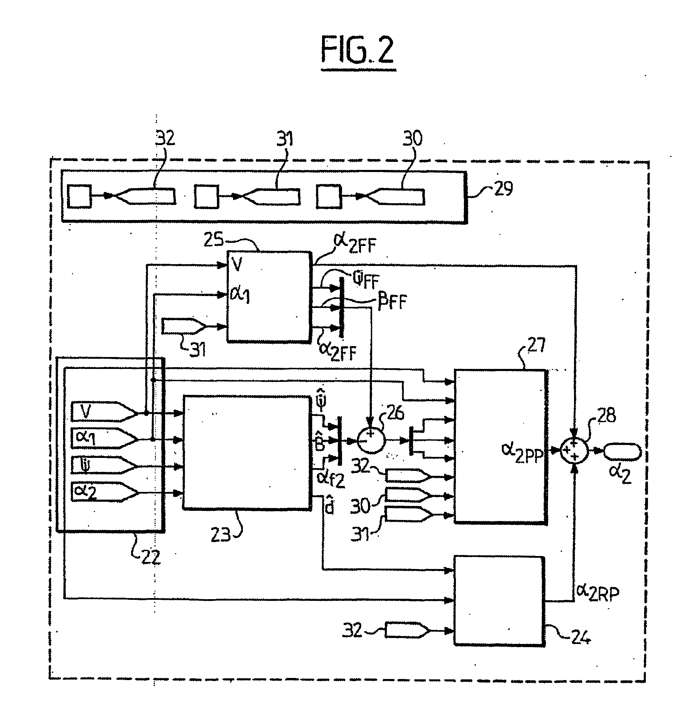

Plus précisément, l'unité de commande 11 comprend un bloc d'entrée 22 recevant les signaux en provenance des capteurs 12 à 14, et notamment la vitesse du véhicule V, la vitesse de lacet $\dot{\psi}$ et l'angle de roues avant $\alpha_1$, voir figure 2. La vitesse du véhicule peut être obtenue en faisant la moyenne de la vitesse des roues avant ou des roues arrière telle que mesurée par les capteurs d'un système antiblocage de roues. Dans ce cas, il est prévu un capteur 13 par roue, le système antiblocage de roues comprenant une sortie reliée à une entrée de l'unité de commande 11 pour fournir l'information de vitesse du véhicule. Alternativement, chaque capteur 13 est relié à une entrée de l'unité de commande 11, l'unité de commande 11 effectuant alors la moyenne de la vitesse des roues.

L'unité de commande 11 comprend également un observateur d'état 23, permettant d'estimer les informations qui ne sont pas mesurées et qui sont nécessaires à la commande, notamment les perturbations qui agissent sur le véhicule. L'observateur d'état 23 peut par exemple être construit à partir d'un modèle de véhicule à deux roues directrices sans ballant en faisant l'hypothèse qu'une perturbation d de type échelon peut agir directement sur la vitesse de lacet du véhicule sur un intervalle de temps fini. Une dynamique qui modélise le comportement de l'actionneur peut être ajoutée. L'équation d'état associée au modèle étendu par la perturbation, est la suivante:

$$\begin{bmatrix} \ddot{\psi} \\ \dot{\beta} \\ \dot{\alpha}_{f2} \\ \dot{d} \end{bmatrix} = \begin{pmatrix} -\dfrac{D_1 L_1^2 + D_2 L_2^2}{V I_z} & \dfrac{D_2 L_2 - D_1 L_1}{I_z} & -\dfrac{D_2 L_2}{I_z} & 0 \\ -1 + \dfrac{D_2 L_2 - D_1 L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{pmatrix} \begin{bmatrix} \dot{\psi} \\ \beta \\ \alpha_{f2} \\ d \end{bmatrix} + \begin{pmatrix} 0 \\ 0 \\ \dfrac{1}{\tau} \\ 0 \end{pmatrix} \alpha_2 + \begin{pmatrix} \dfrac{D_1 L_1}{I_z} \\ \dfrac{D_1}{MV} \\ 0 \\ 0 \end{pmatrix} \alpha_1$$

$$y = \begin{pmatrix} 1 & 0 & 0 & 1 \end{pmatrix} \begin{bmatrix} \dot{\psi} \\ \beta \\ \alpha_{f2} \\ d \end{bmatrix}$$

dans laquelle on note y la sortie considérée, M la masse totale du véhicule, $I_z$ l'inertie du véhicule autour d'un axe vertical passant par son centre de gravité, $L_1$ la distance du centre de gravité à l'essieu avant, $L_2$ la distance du centre de gravité à l'essieu arrière, L l'empattement du véhicule égal à L1+L2, $D_1$ la rigidité de dérive avant, $D_2$ la rigidité de dérive arrière, $\alpha_1$ l'angle des roues avant avec l'axe longitudinal du véhicule, $\alpha_2$ l'angle de consigne des roues arrière avec l'axe longitudinal du véhicule, $\alpha_{f2}$ l'angle de braquage réel des roues arrière, V la vitesse du véhicule, $\dot{\psi}$ la vitesse de lacet, $\beta$ l'angle de dérive, c'est-à-dire de l'angle que fait le vecteur vitesse du véhicule avec l'axe longitudinal dudit véhicule, et $\tau$ le temps de réponse de l'actionneur.

A partir de ce modèle, on développe la théorie classique des observateurs linéaires. L'observateur d'état 23 permet d'estimer les états du véhicule et l'ensemble des perturbations qui agissent sur le véhicule. L'observateur d'état peut donc utiliser l'équation suivante :

$$\begin{bmatrix} \hat{\dot{\psi}} \\ \hat{\beta} \\ \hat{\dot{\alpha}}_{f2} \\ \hat{\dot{d}} \end{bmatrix} = \begin{pmatrix} -\dfrac{D_1 L_1^2 + D_2 L_2^2}{V I_z} & \dfrac{D_2 L_2 - D_1 L_1}{I_z} & -\dfrac{D_2 L_2}{I_z} & 0 \\ -1 + \dfrac{D_2 L_2 - D_1 L_1}{MV^2} & -\dfrac{D_1 + D_2}{MV} & \dfrac{D_2}{MV} & 0 \\ 0 & 0 & 0 & -\dfrac{1}{\tau} \\ 0 & 0 & 0 & 0 \end{pmatrix} \begin{bmatrix} \hat{\psi} \\ \hat{\beta} \\ \hat{\alpha}_{f2} \\ \hat{d} \end{bmatrix} + \begin{pmatrix} 0 \\ 0 \\ \dfrac{1}{\tau} \\ 0 \end{pmatrix} \alpha_2 + \begin{pmatrix} \dfrac{D_1 L_1}{I_z} \\ \dfrac{D_1}{MV} \\ 0 \\ 0 \end{pmatrix} \alpha_1 + Ko(V)(\dot{\psi} - \hat{y})$$

$$\hat{y} = (1 \quad 0 \quad 0 \quad 1) \begin{bmatrix} \hat{\psi} \\ \hat{\beta} \\ \hat{\alpha}_{f2} \\ \hat{d} \end{bmatrix}$$

avec $\Lambda$ qui signifie que les valeurs sont estimées, d la perturbation subie par le véhicule et K(V) le paramètre de réglage de l'observateur d'état qui évolue en fonction de la vitesse du véhicule. Les quatre valeurs estimées $\hat{\dot{\psi}}$, $\hat{\beta}$, $\hat{\alpha}_{f2}$ et $\hat{d}$ fournissent une estimation de l'état du véhicule qui pourrait être utilisée par d'autres éléments de l'unité de commande 11.

L'unité de commande 11 comprend en outre un bloc 24 de rejet de perturbation asymptotique. Le bloc 24 de rejet de perturbation asymptotique permet de rendre la perturbation d inobservable par rapport à la sortie considérée, en général la vitesse de lacet $\dot{\psi}$ du véhicule 1. Le bouclage est effectué sur la perturbation $\hat{d}$ estimée par l'observateur d'état 23. Le bloc 24 de rejet de perturbation asymptotique comprend une entrée recevant l'estimation de perturbation $\hat{d}$ en provenance de l'observateur d'état 23, une entrée de vitesse V en provenance du bloc d'entrée 22 et une entrée d'activation 32 qui permet d'activer ou de désactiver le bloc 24 de rejet de perturbation asymptotique. Dans le cas où le bloc 24 est inactif, la sortie envoie un signal $\alpha_{2RP}$=0. Lorsque le bloc 24 est actif, la sortie $\alpha_{2RP}$ prend une valeur égale à l'inverse du produit de la perturbation estimée $\hat{d}$ par un opérateur Ga. On peut prendre

$$Ga = \frac{((D_1 L_1 - D_2 L_2) * (MV^2 L_2 + D_1 L_1 (L_2 + L_1)) - D_1 (L_1 + L_2)(D_1 L_1^2 + D_2 L_2^2))}{V D_1 D_2 L_2 (L_1 + L_2)}$$

L'unité de commande 11 comprend en outre un module de réaction positive 25 qui permet d'améliorer les performances de la commande sans risque de déstabilisation du système.

Le bloc de réaction positive 25 comprend une entrée de vitesse V, une entrée d'angle de braquage des roues avant $\alpha_1$ et une entrée 31 d'activation et de désactivation, une sortie de vitesse de lacet $\dot{\psi}$, une sortie de dérive $\beta$ au centre de gravité du véhicule 1 et une sortie d'angle de braquage des roues arrière $\alpha_{2FF}$ qui constitue une commande.

Le bloc 25 effectue un calcul de la vitesse de lacet $\dot{\psi}$ et de la dérive $\beta$ à partir d'un modèle de véhicule à deux roues alimenté par les informations d'angle de roue avant $\alpha_1$, d'angle de roue arrière $\alpha_2$ et de vitesse V du véhicule, et le calcul à partir des sorties du modèle et de la vitesse V du véhicule d'une commande qui permet de typer les réponses dynamiques et statiques du véhicule. Cette commande peut être générée par un contrôleur de type « placement de pôles », PID ou autre. Le bloc 25 effectue l'application sur le véhicule de la même commande que celle envoyée sur le modèle du véhicule à deux roues.

Les sorties $\dot{\psi}_{FF}$, $\beta_{FF}$ et $\alpha_{2FF}$ du bloc 25 sont envoyées sur les entrées positives d'un soustracteur 26. Les sorties $\hat{\dot{\psi}}$, $\hat{\beta}$, $\hat{\alpha}_{f2}$ de l'observateur d'état 23 sont envoyées sur les entrées négatives du soustracteur 26. Les sorties du soustracteur 26 sont reliées aux entrées correspondantes d'un bloc 27 de commande par placement de pôles apte à jouer un rôle similaire à celui du bloc 25 lorsque ledit bloc 25 est inactivé.

Le bloc 27 comprend une entrée de vitesse V, une entrée d'angle de roue avant $\alpha_1$, une entrée de vitesse de lacet estimée $\hat{\dot{\psi}}$, une entrée de dérive estimée $\hat{\beta}$, une entrée d'angle estimée de braquage $\hat{\alpha}_{f2}$ des roues arrière, une entrée 32 d'activation et de désactivation dudit bloc 27, ainsi qu'une entrée 31 d'activation et de désactivation du bloc 24 et une entrée d'activation et de désactivation du bloc 25 afin de connaître l'état des blocs 24 et 25.

Le bloc 27 de commande par placement de pôles comprend une sortie d'angle de consigne de braquage de roue arrière $\alpha_{2PP}$ qui est envoyée sur l'entrée d'un additionneur 28 qui reçoit également en entrée l'angle de consigne $\alpha_{2RP}$ en provenance du bloc 24 de rejet de perturbation asymptotique et l'angle de consigne $\alpha_{2FF}$ en provenance du bloc 25 de réaction positive. La sortie de l'additionneur 28 fournit l'angle de consigne de braquage $\alpha_2$ des roues arrière de l'unité de commande 1, avec $\alpha_2 = \alpha_{2PP} + \alpha_{2RP} + \alpha_{2FF}$.

L'unité de commande 1 se complète par un bloc 29 d'activation et de désactivation des blocs 24, 25 et 27. Les sorties du bloc 29 sont reliées aux entrées correspondantes desdits blocs 24, 25 et 27. Le bloc 29 permet de mettre en oeuvre les différentes configurations possibles de l'unité de commande 11. L'activation et la désactivation peuvent être effectuées de façon manuelle ou de façon automatique, par exemple lors de situations identifiées, comme la mise en oeuvre d'un système anti-blocage de roue ou encore d'un système anti-patinage. A cet effet, le bloc 29 peut être pourvu d'entrées en provenance de système extérieur à l'unité de commande 11 afin d'être informé de l'activation de tel système. L'activation et la désactivation manuelles sont particulièrement intéressantes lors du choix et de la mise au point de l'unité de commande 11, afin de pouvoir tester les différentes combinaisons et comparer leurs performances.

Sur la figure 2, la liaison entre les sorties du bloc 29 et les entrées des blocs 24, 25 et 27 n'a pas été représentée pour des raisons de clarté. Toutefois, on a fait figurer les mêmes numéros de référence. On comprend que la sortie 30 du bloc 29 est reliée au bloc 27 pour l'activation et la désactivation dudit bloc 27, que la sortie 31 du bloc 29 est reliée au bloc 25 pour son activation et sa désactivation et que la sortie 32 du bloc 29 est reliée au bloc 24 pour son activation et sa désactivation, les sorties 31 et 32 du bloc 29 étant en outre reliées au bloc 27 afin que ledit bloc 27 bénéficie de l'information d'activation ou de désactivation des blocs 24 et 25.

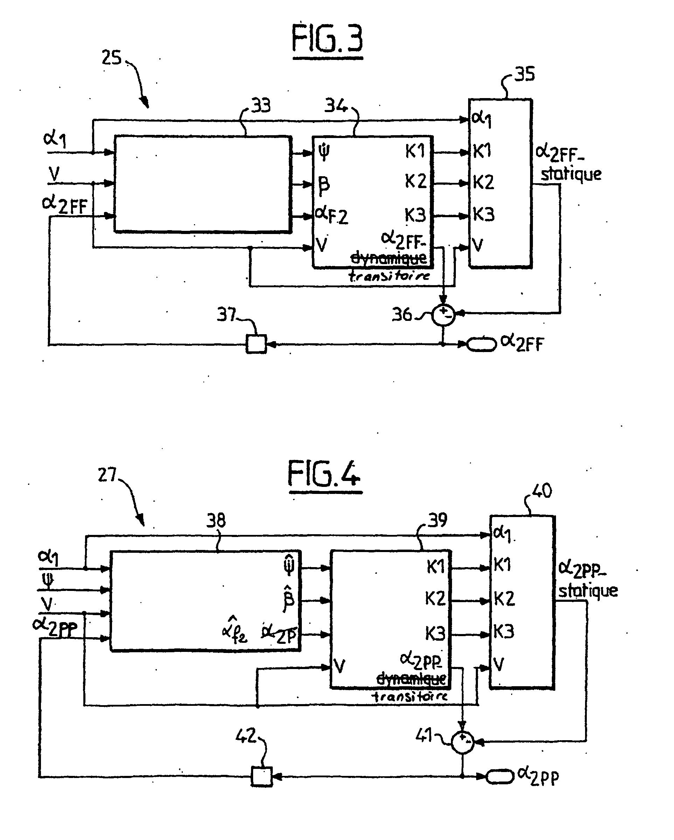

Sur la figure 3, à été représenté plus en détail le bloc 25 de réaction positive.

Le bloc 25 de réaction positive comprend un bloc 33 de modèle de véhicule, un bloc 34 de calcul des transitoires, un bloc 35 de calcul de la commande statique, un soustracteur 36 et un retard unitaire 37. Le bloc 33 de modèle de véhicule reçoit en entrée l'angle $\alpha_1$ dés roues avant, la vitesse V et l'angle $\alpha_{2FF}$ de consigne de braquage des roues arrière tels que calculés par ledit bloc 25, de façon à effectuer un bouclage.

Le bloc 33 a pour objectif de prédire le comportement intrinsèque du châssis, c'est-à-dire sa réponse en vitesse de lacet $\dot{\psi}$ et en dérive $\beta$ en fonction des angles de braquage avant et arrière. Le bloc 33 peut être construit à partir d'un modèle de véhicule à deux roues sans ballant auquel on peut ajouter une dynamique modélisant le comportement des actionneurs 19 et 20. Le bloc 33 calcule également l'angle de braquage de roue arrière $\alpha_{f2}$ en fonction de l'angle de braquage demandé aux actionneurs. L'équation d'état est la suivante :

$$\begin{bmatrix} \ddot{\psi} \\ \dot{\beta} \\ \dot{\alpha}_{f2} \end{bmatrix} = \begin{pmatrix} -\dfrac{D_1 L_1^2 + D_2 L_2^2}{V I_z} & \dfrac{D_2 L_2 - D_1 L_1}{I_z} & -\dfrac{D_2 L_2}{I_z} \\ -1 + \dfrac{D_2 L_2 - D_1 L_1}{M V^2} & -\dfrac{D_1 + D_2}{M V} & \dfrac{D_2}{M V} \\ 0 & 0 & -\dfrac{1}{\tau} \end{pmatrix} \begin{bmatrix} \dot{\psi} \\ \beta \\ \alpha_{f2} \end{bmatrix} + \begin{pmatrix} 0 \\ 0 \\ \dfrac{1}{\tau} \end{pmatrix} \alpha_2 + \begin{pmatrix} \dfrac{D_1 L_1}{I_z} \\ \dfrac{D_1}{M V} \\ 0 \end{pmatrix} \alpha_1$$

$$y = \begin{pmatrix} 1 & 0 & 0 \\ 0 & 1 & 0 \\ 0 & 0 & 1 \end{pmatrix} \begin{bmatrix} \dot{\psi} \\ \beta \\ \alpha_{f2} \end{bmatrix}$$

où y est la sortie considérée.

Le bloc 34 de calcul des transitoires reçoit en entrée les sorties du bloc 33 et la vitesse V du véhicule.

Le bloc 34 calcule la valeur de commande de l'angle de braquage des roues arrière 5 et 6 noté $\alpha_{2FF\text{-transitoire}}$ qui permet d'agir sur la dynamique de la réponse transitoire. Le calcul peut être effectué par une technique de placement de pôles. On peut se référer à cet égard au document Kautsky, J. et N.K.Nichols, « Robust Pole Assignment in Linear State Feedback », Int. J. Control, 41 ((1985), pages 1129-1155. Si on note $[a_1(V)+b_1(V)i\ (a_2(V)+b_2(V)i\ (a_3(V)+b_3(V)i]$. Les trois pôles du système décrit ci-dessus, a(V) et b(V) correspondant respectivement aux parties réelles et imaginaires de chacun des pôles à la vitesse V, on cherche le correcteur $K=[K_1(V)\ K_2(V)\ K_3(V)]$ qui placera les pôles du système bouclé en

$[Tdyn_{11}(V).a_1(V)+Tdyn_{12}(V).b_1(V).i\ Tdyn_{21}(V).a_2(V)+Tdyn_{22}(V).b_2(V).i\ Tdyn_{31}(V).a_3(Y)+Tdyn_{32}(V).b_3(V).i]$

$Tdyn_{11}$, $Tdyn_{12}$, $Tdyn_{21}$, $Tdyn_{22}$, $Tdyn_{31}$, $Tdyn_{32}$ étant les paramètres de réglage (variables en fonction de la vitesse du véhicule V) de la réponse transitoire du véhicule.

Le correcteur K(Vo) peut se calculer, pour chaque vitesse Vo choisie, par la méthode de placement de pôles décrite dans le document précité. Le correcteur K(V) est ensuite interpolé en fonction de la vitesse. On obtient ainsi la variable de commande :

$$\alpha_{2FF\text{-Transitoire}} = K_1(V)\ \dot{\psi} + K_2(V)\ \beta + K_3(V)\ \alpha_{f2}$$

On notera que si les paramètres de réglage sont égaux à 1, on ne modifie pas la réponse dynamique du véhicule, qu'un paramètre supérieur à 1 se traduit par une augmentation de la vivacité de la réponse du véhicule et qu'un paramètre inférieur à 1 se traduit par une diminution de la vivacité de la réponse du véhicule. On peut prévoir, à titre d'exemple de réglage :

$Tdyn_{11} = 0,8$
$Tdyn_{12} = 0$
$Tdyn_{21} = 0,8$
$Tdyn_{22} = 0$
$Tdyn_{31} = 0,8$
$Tdyn_{32} = 0$

Un tel réglage permet de ralentir la réponse dynamique du véhicule et de supprimer les oscillations en vitesse de lacet et dérive du véhicule. A vitesse élevée, 90 km/h par exemple, ce réglage permet d'optimiser le passage d'un double changement de file.

L'unité de commande 11 comprend en outre un bloc 35 de calcul de la commande statique notée $\alpha_{2FF\text{-statique}}$ recevant en entrée l'angle de braquage $\alpha_1$ de roues avant tel que mesuré par le capteur 12, les coefficients $K_1$, $K_2$ et $K_3$ calculés par le bloc 34 et la vitesse V du véhicule mesurée par le capteur 13. La commande $\alpha_{2FF\text{-statique}}$ permet d'agir sur la réponse statique du véhicule et de modifier la valeur stabilisée de la vitesse de lacet obtenue suite à un coup de volant d'amplitude donnée. Le résultat peut être exprimé par comparaison avec le gain statique qu'on obtiendrait sur le véhicule dont les roues arrière sont non directrices.

$$\left[ \frac{\dot{\psi}_{STABILISE}}{\alpha_1} \right]_{4RD} = Tgs. \left[ \frac{\dot{\psi}_{STABILISE}}{\alpha_1} \right]_{2RD} \quad \text{où Tgs est un paramètre de réglage qui}$$

peut varier, si nécessaire, en fonction de la vitesse V.

La deuxième partie de la commande se calcule en fonction de Tgs de la façon suivante :

$$\alpha_{2FF\text{-statique}} = [(1\text{-Tgs}(V)).(1+K_3(V))+\text{Tgs}(V).(K_1(V).G\,\dot{\psi}+K_2(V).G_{\beta 2})+K_2(V)].\alpha_1$$

avec :

$$G_{\dot\psi} = \frac{V}{L+\dfrac{M.(L_2 D_2 - L_1 D_1)}{LD_1 D_2}}$$

$$G_{\beta_2} = G_{\dot\psi}\left(\frac{L_1}{V}+\frac{L_2 \dot M V}{LD_1}\right)$$

Si Tgs est égal à 1, la réponse statique du véhicule n'est pas modifiée et donc identique à celle d'un véhicule à roues arrière non directrices. Une valeur du coefficient Tgs supérieure à 1 se traduit par une augmentation de la réponse statique du véhicule, tandis qu'une valeur inférieure à 1 se traduit par une diminution de la réponse statique du véhicule. On peut prévoir Tgs=1,2 pour une vitesse de 90 km/h, ce qui permet de rendre la réponse du véhicule plus directe et donc d'optimiser le passage d'un double changement de file.

Le soustracteur 36 reçoit sur son entrée positive la sortie de commande $\alpha_{2FF\text{-transitoire}}$ du bloc 34 et sur son entrée négative la sortie de commande $\alpha_{2FF\text{-statique}}$ du bloc 35. La sortie du soustracteur 36 est reliée, d'une part, à la sortie générale du bloc 25, et, d'autre part, au retard unitaire 37, dont la sortie est reliée à l'entrée positive du soustracteur 26. La sortie des variables $\dot\psi_{FF}$ et $\beta_{FF}$ n'a pas été représentée pour des raisons de simplicité du dessein.

Le bloc 27 de commande par placement de pôle permet de calculer à partir de l'état estimé et de la vitesse du véhicule une commande qui permet de typer ou de compléter le typage des réponses dynamiques et statiques du véhicule. La commande peut être générée par un contrôleur de type à placement de pôles comme décrit ci-dessous. Le bloc 27 comprend un observateur d'état 38 recevant en entrée l'angle $\alpha_1$ de braquage des roues avant, la vitesse de lacet $\dot\psi$, la vitesse V du véhicule et l'angle $\alpha_{2PP}$ tel que calculé par ledit bloc 27, voir figure 4. L'observateur d'état 38, qui peut être du même type que l'observateur d'état 23 décrit en référence à la figure 2, fournit en sortie une estimation $\hat{\dot\psi}$ de la vitesse de lacet, $\hat\beta$ de la dérive et $\hat\alpha_{f2}$ de l'angle filtré de braquage des roues arrière. Les sorties de l'observateur d'état 38 sont reliées à un bloc de calcul de la commande transitoire 39 qui reçoit également la vitesse V du véhicule en entrée.

Le bloc 39 calcule la valeur de commande notée $\alpha_{2PP\text{-}}$ transitoire qui permet d'agir sur la dynamique de la réponse transitoire. Le calcul peut être effectué par une technique de placement de pôles. On peut se référer à cet égard au document Kautsky, J. et N.K.Nichols, « Robust Pole Assignment in Linear State Feedback », Int. J. Control, 41 ((1985), pages 1129-1155. Si on note $[a_1(V)+b_1(V)i\ (a_2(V)+b_2(V)i\ (a_3(V)+b_3(V)i]$ les trois pôles du système décrit ci-dessus, a(V) et b(V) correspondant respectivement aux parties réelles et imaginaires de chacun des pôles à la vitesse V, on cherche le correcteur $K=[K_1(V)\ K_2(V)\ K_3(V)]$ qui placera les pôles du système bouclé en $[\text{Tdyn}_{11}(V).a_1(V)+\text{Tdyn}_{12}(V).b_1(V).i\ \text{Tdyn}_{21}(V).a_2(V)+\text{Tdyn}_{22}(V).b_2(V).i\ \text{Tdyn}_{31}(V).a_3(V)+\text{Tdyn}_{32}(V).b_3(V).i]$ $\text{Tdyn}_{11}, \text{Tdyn}_{12}, \text{Tdyn}_{21}, \text{Tdyn}_{22}, \text{Tdyn}_{31}, \text{Tdyn}_{32}$ étant les paramètres de réglage (variables en fonction de la vitesse du véhicule V) de la réponse transitoire du véhicule.

Le correcteur K(Vo) peut se calculer, pour chaque vitesse Vo choisie, par la méthode de placement de pôles décrite dans le document précité. Le correcteur K(V) est ensuite interpolé en fonction de la vitesse. On obtient ainsi la variable de commande :

$$\alpha_{2PP\text{-Transitoire}} = K_1(V).\,\hat{\dot\psi} + K_2(V)\,\hat\beta + K_3(V)\,\hat\alpha_{f2}$$

On notera que si les paramètres de réglage sont égaux à 1, on ne modifie pas la réponse dynamique du véhicule, qu'un paramètre supérieur à 1 se traduit par une augmentation de la vivacité de la réponse du véhicule et qu'un paramètre inférieur à 1 se traduit par une diminution de la vivacité de la réponse du véhicule. On peut prévoir, à titre d'exemple de réglage :

$Tdyn_{11} = 0,8$
$Tdyn_{12} = 0$
$Tdyn_{21} = 0,8$
$Tdyn_{22} = 0$
$Tdyn_{31} = 0,8$
$Tdyn_{32} = 0$

Un tel réglage permet de ralentir la réponse dynamique du véhicule et de supprimer les oscillations en vitesse de lacet et dérive du véhicule. A vitesse élevée, 90 km/h par exemple, ce réglage permet d'optimiser le passage d'un double changement de file.

Le bloc 27 comprend en outre un bloc 40 de calcul de la commande statique notée $\alpha_{2PP\text{-statique}}$ recevant en entrée l'angle de braquage $\alpha_1$ de roues avant tel que mesuré par le capteur 12, les coefficients $K_1$, $K_2$ et $K_3$ calculés le bloc 39 et la vitesse V du véhicule mesurée par le capteur 13. La commande $\alpha_{2PP\text{-statique}}$ permet d'agir sur la réponse statique du véhicule et de modifier la valeur stabilisée de la vitesse de lacet obtenue suite à un coup de volant d'amplitude donnée. Le résultat peut être exprimé par comparaison avec le gain statique qu'on obtiendrait sur le véhicule dont les roues arrière sont non directrices.

$$\left[\frac{\dot{\psi}_{STABILISE}}{\alpha_1}\right]_{4RD} = Tgs.\left[\frac{\dot{\psi}_{STABILISE}}{\alpha_1}\right]_{2RD}$$ où Tgs est un paramètre de réglage qui peut varier, si nécessaire, en fonction de la vitesse V.

La deuxième partie de la commande se calcule en fonction de Tgs de la façon suivante :

$$\alpha_{2PP\text{-statique}} = [(1 - Tgs(V)).(1 + K_3(V)) + Tgs(V).(K_1(V).G_{\dot{\psi}} + K_2(V).G_{\beta_2}) + K_2(V)].\alpha_1$$

avec :

$$G_{\dot{\psi}} = \frac{V}{L + \dfrac{M.(L_2 D_2 - L_1 D_1)}{L D_1 D_2}}$$

$$G_{\beta_2} = G_{\dot{\psi}}\left(\frac{L_1}{V} + \frac{L_2 M V}{L D_1}\right)$$

Si Tgs est égal à 1, la réponse statique du véhicule n'est pas modifiée et donc identique à celle d'un véhicule à roues arrière non directrices. Une valeur du coefficient Tgs supérieure à 1 se traduit par une augmentation de la réponse statique du véhicule, tandis qu'une valeur inférieure à 1 se traduit par une diminution de la réponse statique du véhicule. On peut prévoir Tgs=1,2 pour une vitesse de 90 km/h, ce qui permet de rendre la réponse du véhicule plus directe et donc d'optimiser le passage d'un double changement de file.

Le bloc 27 se complète par un soustracteur 41 recevant sur une entrée positive la variable $\alpha_{2PP\text{-transitoire}}$ issue du bloc 39 et sur une entrée négative la variable $\alpha_{2PP\text{-statique}}$ issue du bloc 40, et fournissant en sortie la variable $\alpha_{2PP} = \alpha_{2PP\text{-transitoire}} - \alpha_{2PP\text{-statique}}$ et par un retard unitaire 42 permettant de retarder la variable pour son envoi à l'entrée de l'observateur d'état 38. La variable $\alpha_{2PP}$ est fournie en sortie du bloc 27.

Dans un mode de réalisation non illustré sur les figures l'unité de commande est similaire à celle illustrée sur la figure 2 et comprend en outre un module de détection de situation qui reçoit des informations par des entrées reliées à des sorties d'autres modules non représentés, tels qu'un module de contrôle-commande de système anti-blocage de roue et un module de contrôle-commande d'anti-patinage de roue. Le module de détection de la situation est apte à envoyer les instructions au bloc 29 d'activation et de désactivation afin d'activer ou de désactiver les blocs 24, 25 et 27 en fonction d'évènements extérieurs.

La présente invention propose un système de commande de braquage de roues arrière avec structure en boucle fermée au moyen d'un contrôleur permettant de modifier la dynamique du système et un gain permettant le réglage du gain statique, le tout variable en fonction de la vitesse.

La stratégie de commande permet de régler la partie transitoire de la réponse latérale du véhicule à un coup de volant. En particulier, on peut régler la vitesse de la réponse ainsi que son amortissement. Le réglage final, fonction de la vitesse du véhicule, permet d'optimiser l'efficacité et la facilité de partage d'un double changement de fil ou encore la manoeuvrabilité à basse vitesse.

La stratégie de commande permet de régler la partie statique de la réponse latérale du véhicule à un coup de volant. Le réglage final, fonction de la vitesse du véhicule, permet par exemple d'optimiser l'efficacité et la facilité de passage d'un double changement de fil et/ou la manoeuvrabilité à basse vitesse.

Les parties statique et dynamique de la réponse du véhicule peuvent faire l'objet d'un réglage indépendant. La structure en boucle fermée assure une excellente précision et une robustesse élevée. En outre, il est possible de tenir compte de la dynamique de l'actionneur 9 des roues avant 3 et 4 et des actionneurs 19 et 20 des roues arrière 5 et 6. Le réglage des paramètres est rapide et intuitif, car lesdits paramètres sont liés aux performances minimales du véhicule, c'est-à-dire aux performances d'un véhicule à roues arrière non directrices. En effet, des paramètres de réglage égaux à 1 ne modifient pas le comportement du véhicule, alors que des paramètres de réglage supérieurs à 1 rendent le comportement plus vif et plus direct et vice-versa.

## Revendications

1. Procédé de commande (10) du braquage de roue arrière directrice (5) pour un véhicule à au moins trois roues directrices, dans lequel on élabore une consigne actuelle de braquage de roue arrière ($\alpha_2$) en fonction de l'angle de braquage de roue avant ($\alpha_1$), de données de déplacement du véhicule et d'une consigne de braquage de roue arrière, **caractérisé par le fait que** l'on estime au moyen d'un observateur d'état (23), les perturbations (d) subies par le véhicule à partir de grandeurs mesurées et, qu'en fonction de situations identifiés, on active ou on désactive sélectivement de façon manuelle ou automatique, différents modules comprenant :

   un module de rejet de perturbation asymptotique (24) effectuant un bouclage sur une perturbation estimée ($\hat{d}$) reçue en entrée, et émettant en sortie, un signal ($\alpha_{2RP}$) dont la valeur est l'inverse du produit de la perturbation estimée ($\hat{d}$) par un opérateur ($G_a$), de façon à rendre la perturbation (d) inobservable par rapport à la sortie lorsque ledit module est activé ;

   un module de réaction positive (25) capable, lorsqu'il est activé, d'élaborer, à partir d'un modèle de véhicule à deux roues, une consigne d'angle de braquage ($\alpha_{2FF}$) de roue arrière à partir d'une valeur de commande corrigée ($\alpha_{2FF}$-transitoire) de la dynamique de la réponse transitoire et d'une valeur de commande statique ($\alpha_{2FF-statique}$) ;

   et un module de commande (27) qui reçoit en entrée l'information d'activation ou de désactivation des modules de rejet de perturbation (24) et de réaction positive (25), ledit module de commande (27) élaborant une consigne d'angle de braquage de roue arrière ($\alpha_{2PP}$) permettant d'agir sur la dynamique de la réponse transitoire et sur la réponse statique du véhicule ;

   on calcule la consigne actuelle d'angle de braquage de roue arrière ($\alpha_2$) à partir des valeurs de sortie des différents modules précités (24, 25, 27).

2. Procédé selon la revendication 1, dans lequel les données de déplacement du véhicule comprennent la vitesse du véhicule de façon que la consigne actuelle de braquage de roue arrière soit établie en fonction de la vitesse (V) du véhicule.

3. Procédé selon l'une quelconque des revendications précédentes, dans lequel l'observateur d'état (23) permet d'estimer des données d'état du véhicule à partir de données d'entrée, telles que la masse du véhicule (M), l'inertie ($I_z$) du véhicule, les distances du centre de gravité aux essieux avant et arrière ($L_1$, $L_2$), et les rigidités des dérives avant et arrière ($D_1$, $D_2$).

4. Procédé selon la revendication 3, dans lequel les données d'état estimées comprennent la vitesse de lacet $\dot{\psi}$, l'angle de dérive $\beta$, et l'angle de braquage de roue arrière $\alpha_2$.

**5.** Système de commande (10) du braquage de roue arrière directrice (5) pour un véhicule à au moins trois roues directrices, comprenant des moyens pour élaborer une consigne actuelle de braquage de roue arrière ($\alpha_2$) en fonction de l'angle de braquage de roue avant ($\alpha_1$), de données de déplacement du véhicule et d'une consigne de braquage de roue arrière, **caractérisé par le fait qu'**il comprend :

un module de rejet de perturbation asymptotique (24) capable d'effectuer un bouclage sur une perturbation estimée ($\hat{d}$) obtenue au moyen d'un observateur d'état (23) et reçue en entrée, ledit module de rejet (24) étant capable d'émettre en sortie un signal ($\alpha_{2RP}$) dont la valeur est l'inverse du produit de la perturbation estimée (d) par un opérateur ($G_a$), de façon à rendre la perturbation (d) inobservable par rapport à la sortie lorsque ledit module est activé ;
un module de réaction positive (25) capable, lorsqu'il est activé, d'élaborer, à partir d'un modèle de véhicule à deux roues, une consigne d'angle de braquage ($\alpha_{2FF}$) de roue arrière à partir d'une valeur de commande corrigée ($\alpha_{2FF\text{-}transitoire}$) de la dynamique de la réponse transitoire et d'une valeur de commande statique ($\alpha_{2FF\text{-}statique}$) ;
un module de commande (27) qui reçoit en entrée l'information d'activation ou de désactivation des modules de rejet de perturbation (24) et de réaction positive (25), ledit module de commande (27) élaborant une consigne d'angle de braquage de roue arrière ($\alpha_{2PP}$) permettant d'agir sur la dynamique de la réponse transitoire et sur la réponse statique du véhicule ;
et un moyen (29) d'activation et de désactivation sélective des modules précités (24, 25, 27).

**6.** Système selon la revendication 5, **caractérisé par le fait que** le module (27) de commande comprend un bloc de commande par placement de pôles.

**7.** Système selon l'une quelconque des revendications 5 à 6, **caractérisé par le fait que** le module de réaction positive (25) est rebouclé.

**8.** Système selon l'une quelconque des revendications 5 à 7, **caractérisé par le fait que** le module de réaction positive (25) comprend un élément de calcul de la vitesse de lacet $\dot{\psi}$ et de la dérive $\beta$ au centre de gravité du véhicule, à partir du modèle de véhicule à deux roues.

**9.** Système selon l'une quelconque des revendications 5 à 8, **caractérisé par le fait que** le moyen d'activation et de désactivation sélective (29) est à commande manuelle.

**10.** Système selon l'une quelconque des revendications 5 à 9, **caractérisé par le fait que** le moyen d'activation et de désactivation sélective (29) est à commande automatique.

**11.** Véhicule (1) comprenant un châssis (2), au moins trois roues directrices reliées élastiquement au châssis, **caractérisé par le fait qu'**il comporte un système de commande du braquage de roue arrière directrice selon l'une des revendications 5 à 10.

**Claims**

**1.** Method (10) of controlling the steerable rear wheel deflection (5) for a vehicle with at least three steerable wheels, in which a current setting of rear wheel deflection ($\alpha_2$) is formulated as a function of the front wheel deflection angle ($\alpha_1$), of vehicle displacement data and of a rear wheel deflection setting, **characterized in that** the disturbances (d) undergone by the vehicle are estimated by means of a state observer (23), on the basis of measured quantities and, that as a function of identified situations, various modules are activated or deactivated selectively in a manual or automatic manner, said modules comprising:

an asymptotic disturbance rejection module (24) performing a looping over an estimated disturbance ($\hat{d}$) received as input, and emitting as output, a signal ($\alpha_{2RP}$) whose value is the inverse of the product of the estimated disturbance ($\hat{d}$) times an operator ($G_a$), so as to render the disturbance (d) unobservable with respect to the output when said module is activated;
a positive-feedback module (25) capable, when it is activated, of formulating, on the basis of a two-wheeled vehicle model, a rear wheel deflection angle setting ($\alpha_{2FF}$) on the basis of a control value corrected ($\alpha_{2FF\text{-}transient}$) for the dynamics of the transient response and a static control value ($\alpha_{2FF\text{-}static}$) ;
and a control module (27) which receives as input the information regarding activation or deactivation of the disturbance rejection module (24) and positive-feedback module (25), said control module (27) formulating a rear wheel deflection angle setting ($\alpha_{2PP}$) making it possible to act on the dynamics of the transient response and on the static response of the vehicle;

the current setting of rear wheel deflection angle ($\alpha_2$) is calculated on the basis of the output values of the various aforementioned modules (24, 25, 27).

2. Method according to Claim 1, in which the vehicle displacement data comprise the speed of the vehicle so that the current setting of rear wheel deflection is established as a function of the speed (V) of the vehicle.

3. Method according to any one of the preceding claims, in which the state observer (23) makes it possible to estimate state data of the vehicle on the basis of input data, such as the mass of the vehicle (M), the inertia ($I_z$) of the vehicle, the distances from the centre of gravity to the front and rear axles ($L_1$, $L_2$), and the rigidities of the front and rear drifts ($D_1$, $D_2$).

4. Method according to Claim 3, in which the estimated state data comprise the yaw rate $\dot{\psi}$, the drift angle $\beta$, the rear wheel deflection angle $\alpha_2$.

5. System (10) for controlling the steerable rear wheel deflection (5) for a vehicle with at least three steerable wheels, comprising means for formulating a current setting of rear wheel deflection ($\alpha_2$) as a function of the front wheel deflection angle ($\alpha_1$), of vehicle displacement data and of a rear wheel deflection setting, **characterized in that** it comprises:

an asymptotic disturbance rejection module (24) capable of performing a looping over an estimated disturbance ($\hat{d}$) obtained by means of a state observer (23) and received as input, said rejection module (24) being capable of emitting as output a signal ($\alpha_{2RP}$) whose value is the inverse of the product of the estimated disturbance ($\hat{d}$) times an operator ($G_a$), so as to render the disturbance (d) unobservable with respect to the output when said module is activated;

a positive-feedback module (25) capable, when it is activated, of formulating, on the basis of a two-wheeled vehicle model, a rear wheel deflection angle setting ($\alpha_{2FF}$) on the basis of a control value corrected ($\alpha_{2FF\text{-}transient}$) for the dynamics of the transient response and a static control value ($\alpha_{2FF\text{-}static}$) ;

a control module (27) which receives as input the information regarding activation or deactivation of the disturbance rejection module (24) and positive-feedback module (25), said control module (27) formulating a rear wheel deflection angle setting ($\alpha_{2PP}$) making it possible to act on the dynamics of the transient response and on the static response of the vehicle;

and a means (29) for selective activation and deactivation of the aforementioned modules (24, 25, 27).

6. System according to Claim 5, **characterized in that** the control module (27) comprises a control block based on pole placement.

7. System according to any one of Claims 5 to 6, **characterized in that** the positive-feedback module (25) is looped back.

8. System according to any one of Claims 5 to 7, **characterized in that** the positive-feedback module (25) comprises an element for calculating the yaw rate $\dot{\Psi}$ and the drift $\beta$ at the centre of gravity of the vehicle, on the basis of a two-wheeled vehicle model.

9. System according to any one of Claims 5 to 8, **characterized in that** the means of selective activation and deactivation (29) is of manual control type.

10. System according to any one of Claims 5 to 8, **characterized in that** the means of selective activation and deactivation (29) is of automatic control type.

11. Vehicle (1) comprising a chassis (2), at least three steerable wheels linked elastically to the chassis, **characterized in that** it comprises a system for controlling the steerable rear wheel deflection according to one of Claims 5 to 10.

**Patentansprüche**

1. Verfahren zur Steuerung (10) des Einschlags eines gelenkten Hinterrads (5) für ein Fahrzeug mit mindestens drei gelenkten Rädern, bei dem ein aktueller Hinterradeinschlag-Sollwert ($\alpha_2$) in Abhängigkeit vom Vorderrad-Einschlagwinkel ($\alpha_1$), von Fahrdaten des Fahrzeugs und von einem Hinterradeinschlag-Sollwert erarbeitet wird, **dadurch gekennzeichnet, dass** mittels eines Zustandsbeobachters (23) die vom Fahrzeug erfahrenen Störungen (d) ausgehend von gemessenen Größen geschätzt werden, und dass in Abhängigkeit von identifizierten Situationen verschiedene Module selektiv manuell aktiviert oder deaktiviert werden, die enthalten:

   ein Modul asymptotischer Störungsabweisung (24), das ein Rückschleifen zu einer am Eingang empfangenen geschätzten Störung (d) durchführt, und das am Ausgang ein Signal ($\alpha_{2RP}$) sendet, dessen Wert der Kehrwert des Produkts aus der geschätzten Störung (d) und aus einem Operator ($G_a$) ist, um die Störung (d) bezüglich des Ausgangs unbeobachtbar zu machen, wenn das Modul aktiviert ist;
   ein Modul positiver Reaktion (25), das, wenn es aktiviert ist, ausgehend von einem zweirädrigen Fahrzeugmodell einen Hinterradeinschlagwinkel-Sollwert ($\alpha_{2FF}$) ausgehend von einem korrigierten Steuerwert ($\alpha_{2FF\text{-}Übergang}$) der Dynamik der Übergangsantwort und von einem statischen Steuerwert ($\alpha_{2FF\text{-}statisch}$) erarbeiten kann;
   und ein Steuermodul (27), das am Eingang die Information der Aktivierung oder Deaktivierung der Module der Störungsabweisung (24) und der positiven Reaktion (25) empfängt, wobei das Steuermodul (27) einen Hinterradeinschlagwinkel-Sollwert ($\alpha_{2PP}$) erarbeitet, der es ermöglicht, auf die Dynamik der Übergangsantwort und auf die statische Antwort des Fahrzeugs einzuwirken;
   der aktuelle Hinterradeinschlagwinkel-Sollwert ($\alpha_2$) ausgehend von den Ausgangswerten der verschiedenen erwähnten Module (24, 25, 27) berechnet wird.

2. Verfahren nach Anspruch 1, bei dem die Fahrdaten des Fahrzeugs die Geschwindigkeit des Fahrzeugs enthalten, damit der aktuelle Hinterradeinschlag-Sollwert in Abhängigkeit von der Geschwindigkeit (V) des Fahrzeugs erstellt wird.

3. Verfahren nach einem der vorhergehenden Ansprüche, bei dem der Zustandsbeobachter (23) es ermöglicht, Zustandsdaten des Fahrzeugs ausgehend von Eingangsdaten, wie die Masse des Fahrzeugs (M), die Trägheit ($I_z$) des Fahrzeugs, die Abstände des Schwerpunkts zu den Vorder- und Hinterachsen ($L_1$, $L_2$), und die Steifigkeiten der vorderen und hinteren Driften ($D_1$, $D_2$), zu schätzen.

4. Verfahren nach Anspruch 3, bei dem die geschätzten Zustandsdaten die Giergeschwindigkeit $\dot{\psi}$, den Driftwinkel $\beta$ und den Hinterradeinschlagwinkel $\alpha_2$ enthalten.

5. System zur Steuerung (10) des Einschlags eines gelenkten Hinterrads (5) für ein Fahrzeug mit mindestens drei gelenkten Rädern, das Einrichtungen zum Erarbeiten eines aktuellen Hinterradeinschlag-Sollwerts ($\alpha_2$) in Abhängigkeit vom Vorderradeinschlagwinkel ($\alpha_1$), von Fahrdaten des Fahrzeugs und von einem Hinterradeinschlag-Sollwert enthält, **dadurch gekennzeichnet, dass** es enthält:

   ein Modul asymptotischer Störungsabweisung (24), das ein Rückschleifen zu einer geschätzten Störung (d) durchführen kann, die mittels eines Zustandsbeobachters (23) erhalten und am Eingang empfangen wird, wobei das Abweisungsmodul (24) am Ausgang ein Signal ($\alpha_{2RP}$) senden kann, dessen Wert der Kehrwert des Produkts aus der geschätzten Störung (d) und aus einem Operator ($G_a$) ist, um die Störung (d) bezüglich des Ausgangs unbeobachtbar zu machen, wenn das Modul aktiviert ist;
   ein Modul positiver Reaktion (25), das, wenn es aktiviert ist, ausgehend von einem zweirädrigen Fahrzeugmodell einen Hinterradeinschlagwinkel-Sollwert ($\alpha_{2FF}$) ausgehend von einem korrigierten Steuerwert ($\alpha_{2FF\text{-}Übergang}$) der Dynamik der Übergangsantwort und von einem statischen Steuerwert ($\alpha_{2PP\text{-}statisch}$) erarbeiten kann;
   ein Steuermodul (27), das am Eingang die Information der Aktivierung oder Deaktivierung der Module der Störungsabweisung (24) und der positiven Reaktion (25) empfängt, wobei das Steuermodul (27) einen Hinterradeinschlagwinkel-Sollwert ($\alpha_{2PP}$) erarbeitet, der es ermöglicht, auf die Dynamik der Übergangsantwort und auf die statische Antwort des Fahrzeugs einzuwirken;
   und eine Einrichtung (29) zur selektiven Aktivierung und Deaktivierung der erwähnten Module (24, 25, 27).

6. System nach Anspruch 5, **dadurch gekennzeichnet, dass** das Steuermodul (27) einen Steuerblock durch Platzierung von Polen enthält.

7. System nach einem der Ansprüche 5 bis 6, **dadurch gekennzeichnet, dass** das Modul positiver Reaktion (25) rückgeschleift wird.

8. System nach einem der Ansprüche 5 bis 7, **dadurch gekennzeichnet, dass** das Modul positiver Reaktion (25) ein Element zur Berechnung der Giergeschwindigkeit $\dot{\psi}$ und der Drift $\beta$ im Schwerpunkt des Fahrzeugs ausgehend von dem zweirädrigen Fahrzeugmodell enthält.

9. System nach einem der Ansprüche 5 bis 8, **dadurch gekennzeichnet, dass** die Einrichtung zur selektiven Aktivierung und Deaktivierung (29) manuell gesteuert wird.

10. System nach einem der Ansprüche 5 bis 8, **dadurch gekennzeichnet, dass** die Einrichtung zur selektiven Aktivierung und Deaktivierung (29) automatisch gesteuert wird.

11. Fahrzeug (1), das ein Fahrgestell (2) und mindestens drei gelenkte Räder enthält, die elastisch mit dem Fahrgestell verbunden sind, **dadurch gekennzeichnet, dass** es ein System zur Steuerung des Einschlags eines gelenkten Hinterrads nach einem der Ansprüche 5 bis 10 aufweist.

# FIG.1

# FIG.2

# FIG.3

# FIG.4

## RÉFÉRENCES CITÉES DANS LA DESCRIPTION

**Documents brevets cités dans la description**

- FR 2681303 A

- WO 0214137 A

**Littérature non-brevet citée dans la description**

- **Kautsky, J. ; N.K.Nichols.** Robust Pole Assignment in Linear State Feedback. *Int. J. Control,* 1985, vol. 41, 1129-1155